# EUROPEAN PATENT APPLICATION

(11) **EP 3 950 648 A1**
(43) Date of publication of application: **09.02.2022**
(21) Application number: 19922172.2
(22) Date of filing: 27.03.2019
(51) Int. Cl.: C05G 1/00

(54) **FERTILISING COMPOSITION WHICH INCLUDES A PLANT-ASSIMILABLE PHOSPHORUS AND CALCIUM POTENTIATOR AND USE THEREOF**

(71) Applicant: FERTINAGRO BIOTECH, S.L., 44195 Teruel (ES)
(72) Inventor: ATARES REAL, Sergio, 44195 Teruel (ES); ROMERO LOPEZ, Joaquín, 44195 Teruel (ES); SALAET MADORRAN, Ignasi, 44195 Teruel (ES); FERRER GINES, María, 44195 Teruel (ES); CABALLERO MOLADA, Marcos, 44195 Teruel (ES); YANCE CHAVEZ, Tula del Carmen, 44195 Teruel (ES); FUERTES DOÑATE, Carlos, 44195 Teruel (ES)
(74) Representative: González López-Menchero, Álvaro Luis
(86) International application number: PCT/ES2019/070206
(87) International publication number: WO 2020/193817

(57) **Abstract**

The invention provides a fertilising composition which includes a plant-assimilable phosphorus and calcium potentiator, said assimilable phosphorus potentiator being glyceric acid, a combination of said fertilising composition together with other fertilisers and/or biostimulants, as well as its use in the form of a hydrosoluble powder, granulate or liquid prior dissolution in water for direct application by fertigation or foliar application.

## Description

The present invention relates to a fertilising composition which includes a plant-assimilable phosphorus and calcium potentiator, as well as to the use of said fertilising composition.

More specifically, in a first aspect, the invention provides a fertilising composition which includes glyceric acid as a plant-assimilable phosphorus and calcium potentiator, wherein the glyceric acid improves total phosphorus levels in the plant, the application thereof constituting an alternative to conventional phosphate fertilisers.

In a second aspect, the invention relates to a combination of the described fertilising composition together with another additional fertiliser and/or biostimulant.

Phosphorus is an essential macronutrient for plant growth and a determining factor in crop productivity. It is absorbed by plants in its soluble forms, mainly HPO₄²⁻ and H₂PO₄-. However, despite high applications of phosphate mineral fertilisers, phosphorus deficiency is a common problem in agricultural soils due to the low solubility (<1%) of total organic and inorganic phosphorus in these soils (Bünemann et al., "Assessment of gross and net mineralization rates of soil organic phosphorus - A review", Soil Biology and Biochemistry. 89:92-98, 2015). This is because much of the phosphorus applied in fertilisers is immobilised by sorption processes, by precipitation with Fe³⁺ and Al³⁺ ions in acidic soils and with Ca²⁺ ions in calcareous soils, or by its transformation into organic forms (Liao et al., "Phosphorus and aluminum interactions in soybean in relation to aluminum tolerance. Exudation of specific organic acids from different regions of the intact system", Plant Physiol. 141, 674-684, 2006). Therefore, the major problem of plant nutrition related to phosphorus is not the total phosphorus concentration in the soil, but its bioavailability to plants.

In addition, the abusive or inappropriate use of phosphate mineral fertilisers and the low efficiency of their use by crops (around 45%) lead to decreases in soil fertility, significant environmental pollution, mainly in rivers, lakes and aquifers, and increases in production costs for farmers (Tilman et al., "Agricultural sustainability and intensive production practices", Nature. 418: 671-7, 2002). Furthermore, phosphate rocks, which are the main raw material used industrially in the production of phosphate fertilisers, are a non-renewable source of phosphorus, so their reserves are limited and gradually diminishing (Saeid et al., "Phosphorus Solubilization by Bacillus Species", Nature. 418: 677-7, 2002). Molecules. 23, 2897, 2018).

In this sense, the main solutions designed to solve the above-mentioned problems consist in the use of metal ions complexed with amino acids to improve phosphorus solubilisation by microorganisms present in the soil (EP3181538A1) or in the application of inocula of phosphorus-solubilising microorganisms (Hu et al., "Development of a biologically based fertilizer, incorporating Bacillus megaterium A6, for improved phosphorus nutrition of oilseed rape", Can J Microbiol. 59:231-6, 2013; US5256544A; WO2014082167A1).

For the above reasons, there is currently a need in the plant nutrition sector to look for alternatives to conventional phosphate fertilisation to increase the utilisation of both phosphate fertilisers and accumulated total phosphorus reserves in soils (Zhu et al., "Phosphorus activators contribute to legacy phosphorus availability in agricultural soils: A review", Science of the Total Environment 612 (2018) 522-537, 2018) and to increase crop productivity in a sustainable way. Indeed, some authors suggest that accumulated phosphorus in agricultural soils could be sufficient to maintain global crop yields for 100 years if it were in available forms (Khan et al., "Role of phosphate-solubilizing microorganisms in sustainable agriculture - a review", Agron. Sustain. Dev. 27, 29-43, 2007).

Furthermore, plants exude through the roots a considerable part of the organic compounds generated in photosynthesis (between 11 and 40%) in order to regulate the chemical composition of the rhizosphere and promote the growth of microorganisms that can provide benefits to the plant in a given ecosystem (Badri and Vivanco, "Regulation and function of root exudates", Plant, Cell and Environment 32, 666-681, 2009; Zhalnina et al, "Phosphorus activators contribute to legacy phosphorus availability in agricultural soils: A review", Science of the Total Environment 612 (2018) 522-537, 2018). Compounds present in root exudates include sugars, amino acids, organic acids, fatty acids and secondary metabolites (Bais et al., "The role of root exudates in rhizosphere interactions with plants and other organisms", Annu Rev Plant Biol. 57:233-66, 2006).

In addition to the cultivated species and its phenological stage, the composition and quantity of these exudates are mainly influenced by environmental signals, e.g. the availability of nutrients in the soil. In fact, plants have mechanisms of adaptation to soils with low assimilable phosphorus, including the exudation at root level of metabolites that increase phosphorus solubilisation and acquisition and/or modulate the composition of soil microbial communities, favouring microorganisms with the ability to solubilise inorganic phosphorus or mineralise organic phosphorus. These exudates include carboxylic acids, sugars, phenolic compounds, amino acids, and even certain enzymes (Carvalhais et al., "Root exudation of sugars, amino acids, and organic acids by maize as affected by nitrogen, phosphorus, potassium, and iron deficiency", J. Plant Nutr. Plant Nutr. Soil Sci. 174, 3-11, 2011; Vengavasi and Pandey, "Root exudation index as a physiological marker for efficient phosphorus acquisition in soybean: an effective tool for plant breeding", Crop Pasture Sci. 67, 1096-1109, 2016). High root exudation places an additional burden on the carbon demand of the plant, which diverts more of the resources generated by its photosynthetic machinery to this purpose (Vengavasi and Pandey, *supra*). In the specific case of phosphorus deficiency, plants release about 30% of the carbon fixed by photosynthesis as root exudates during phosphorus deficiency (Khorassani et al., "Citramalic acid and salicylic acid in sugar beet root exudates solubilize soil phosphorus", BMC Plant Biol. 11, 121, 2011).

In view of the above, the present invention builds on the above-mentioned approaches so that, on the one hand, by regulating the phosphorus transformation processes in soils, root exudates can increase the availability of this nutrient for plants and the efficiency of its use in agricultural soils and, on the other hand, it constitutes an alternative to the use of traditional phosphate fertilisers.

It would therefore be desirable to have fertilisers that mimic root exudates and have an analogous effect that can make it possible to dispense with or reduce the application of mineral fertilisers and mitigate environmental pollution, while providing an alternative to conventional phosphate fertilisation to reduce pollution from its use and increase the efficiency of phosphorus use and crop productivity in a sustainable way.

The present invention fulfils both of the above objectives by providing a fertilising composition that includes glyceric acid as a plant-assimilable phosphorus potentiator, wherein glyceric acid improves total phosphorus levels in the plant.

Likewise, in basic soils (pH 8 or higher) and with high limestone content, phosphorus precipitates due to the presence of calcium, giving rise to calcium phosphates. In such soils, solubilisation of insoluble phosphorus will not only release plant-assimilable phosphorus, but also assimilable calcium (Rietra RPJJ, et al., "Interaction between Calcium and Phosphate Adsorption on Goethite", Environ. Sci. Technol., 2001, 35 (16), pp. 3369-3374; Lei Y. et al., 2018, "Interaction of calcium, phosphorus and natural organic matter in electrochemical recovery of phosphate", Water Research Volume 142, pp. 10-17; Tunesi S., et al., 1999, "Phosphate adsorption and precipitation in calcareous soils: the role of calcium ions in solution and carbonate minerals", Volume 53, (3), pp. 219-227).

Glyceric acid, or 2,3-dihydroxypropanoic acid, is a trionic acid derived from the oxidation of glycerol that occurs naturally in plants such as those of the genus *Brassica* (Kim et al., "Metabolic Differentiation of Diamondback Moth (Plutella xylostella (L.)) Resistance in Cabbage (Brassica oleracea L. ssp. capitata)", J. Agric. Food Chem., 2013, 61 (46), pp. 11222-11230, 2013).

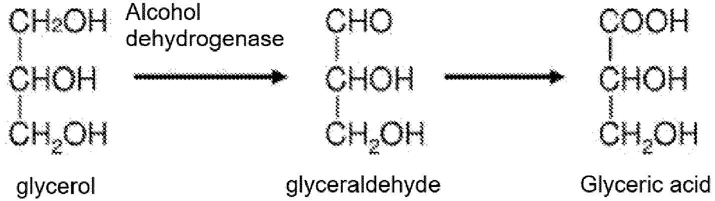

As mentioned above, in a first aspect, the present invention provides a fertilising composition which includes glyceric acid as a plant-assimilable phosphorus and calcium potentiator.

In one embodiment, the fertilising composition of the invention consists of 100% by weight of glyceric acid in the form of a hydrosoluble powder.

In another embodiment, the fertilising composition of the invention comprises between 30 and 80% by weight of glyceric acid and between 5 and 30% by weight of other components selected from the group consisting of sugars, amino acids, organic acids other than glyceric acid, polyamines, glycerol, myoinositol, adenine, uracil, cytosine, guanine and combinations thereof, the fertilising composition being in the form of a hydrosoluble powder.

When present in the present fertilising composition, sugars are preferably selected from mono- and di-saccharides such as sucrose, fructose, trehalose, glucose, arabinose, maltose, as well as mixtures thereof.

When present in the present fertilising composition, amino acids are preferably selected from threonine, lysine, phenylalanine, glutamic acid, methionine, GABA, ornithine, glycine, glutamine, aspartic acid, serine, asparagine, tyrosine, tryptophan, valine, leucine, isoleucine, proline, 4-hydroxyproline, arginine, histidine, alanine, cysteine, and mixtures thereof.

When present in the present fertilising composition, the organic acids other than glyceric acid are preferably selected from lactic acid, succinic acid, oxalic acid, gluconic acid, threonic acid, fumaric acid and mixtures thereof.

Polyamines, if present in the present composition, are preferably selected from putrescine, spermidine, spermine and mixtures thereof.

The presence of these components other than glyceric acid in the composition of the invention is based on the fact that such components form part of the root exudates in the crops tested in the absence of phosphorus described below or are described in the literature as components of said exudates under normal conditions for plant development (Zhalnina et al, "Dynamic root exudate chemistry and microbial substrate preferences drive patterns in rhizosphere microbial community assembly", Nat Microbiol, 3(4):470-480, 2018), which are therefore desirable for the aforementioned purpose of having a fertilising composition that mimics root exudates with a similar effect that can make it possible to dispense with or reduce the application of mineral fertilisers.

The fertilising composition of the invention is formulated as a hydrosoluble powder, as indicated above, but can also be formulated as a liquid composition by dissolving it in water or in the form of granulates by adding granulating agents known to the person skilled in the art.

According to the second aspect, the invention relates to a fertilising composition as described above in combination with another additional fertiliser selected from nitrogen fertilisers, phosphate fertilisers, potassium fertilisers, calcium fertilisers and amendments, micronutrients, boric acid and leonardite and combinations thereof, and/or in combination with one or more biostimulants selected from the group consisting of amino acid hydrolysates, humic extracts, algae extracts, live micro-organisms, extracts of micro-organisms and combinations thereof. The live micro-organisms or extracts of micro-organisms shall preferably be of the species *Pichia guilliermondii, Azotobacter, chroococcum, Bacillus megaterium, Bacillus aryabhattai, Oceanobacillus picturae,* or bacteria belonging to genera recognised for their phosphorus solubilising capacity: *Pseudomonas, Bacillus, Rhizobium, Burkholderia, Achromobacter, Agrobacterium, Micrococcus, Aerobacter, Flavobacterium, Mesorhizobium, Azotobacter, Azospirillum, Erwinia, Paenibacillus and Oceanobacillus* (Rodriguez and Fraga, "Phosphate solubilizing bacteria and their role in plant growth promotion", Biotechnology Advances 17 (1999) 319-339, 1999; EI-Tarabily and Youssef, "Enhancement of morphological, anatomical and physiological characteristics of seedlings of the mangrove Avicennia marina inoculated with a native phosphate-solubilizing isolate of Oceanobacillus picturae under greenhouse conditions", Plant Soil (2010) 332:147-162, 2010; Zhu et al., 2018, *supra*).

In this case, the composition of the invention is present in the combination in a proportion of 0.5 to 10% by weight.

In one embodiment, the additional nitrogen fertiliser is present in the combination in a proportion of 5 to 90% by weight and is selected from urea, ammonium nitrosulphate, potassium nitrate, ammonium sulphate, ammonium nitrate, calcium nitrate.

In another embodiment, the additional phosphate fertiliser is present in the combination in a proportion of 5 to 90 % by weight and is selected from phosphate rock, triple superphosphate, single superphosphate, concentrated superphosphate, phosphoric acid.

In yet another embodiment, the additional potassium fertiliser is present in the combination in a proportion of 5 to 90% by weight and is selected from potassium chloride, potassium sulphate, potassium and magnesium double sulphate, potassium hydroxide.

In another embodiment, the additional calcium fertiliser is present in the combination in a proportion of 5 to 90% by weight and is selected from calcium chloride, calcium cyanamide, calcium sulphate, dolomite, limestone, calcium oxide, calcium hydroxide.

In yet another embodiment, the additional micronutrient fertiliser is present in the combination in a proportion of 1 to 30% by weight and is selected from iron sulphate, magnesium sulphate, zinc sulphate, manganese sulphate, copper sulphate, ammonium molybdate, cobalt chloride.

In a further embodiment, boric acid as an additional fertiliser is present in the combination in a proportion of 1 to 30% by weight.

In another embodiment, leonardite as an additional fertiliser is present in the combination in a proportion of 5 to 90% by weight.

In the case of the combination of the fertilising composition of the invention with biostimulants as described above, preferably the biostimulants are present in the combination in a proportion of 5 to 90% by weight.

It is also the object of the invention to use the fertilising compositions described here in the form of a hydrosoluble powder, in the form of a granulate or in the form of a liquid prior dissolution in water for the application thereof by fertigation or foliar application.

If the composition of the invention is used in the form of a hydrosoluble powder by fertigation or by foliar application prior dissolution in water, it is preferably applied in an amount of 0.5 to 20 kg/ha and 0.06 to 1 kg/ha respectively.

If the composition of the invention is used in combination with another additional fertiliser in the form of a granulate, preferably said combination is applied directly in an amount of 75 to 1,500 kg/ha.

If the composition of the invention is used in combination with biostimulants in the form of a liquid for the application thereof by fertigation or foliar application, it is preferably applied in an amount of 0.5 to 20 kg/ha and 0.06 to 1 kg/ha respectively.

### Examples

### 1. Trial to obtain and identify root exudates in the absence of phosphorus.

In order to characterise in detail the response of crops to phosphorus deficiency and to identify the metabolites exuded by roots that have the greatest influence on phosphorus dynamics in the soil, the Applicant analysed the differential exudate profile of two crop species of agronomic interest, maize and tomato, in the absence of phosphorus. The following is a brief description of the trial to determine the root exudates emitted in the absence of phosphorus.

The method, similar to that used by other authors (Naveed et al., 2017, "Plant exudates may stabilize or weaken soil depending on species, origin and time", European Journal of Soil Science) was the same for both maize seeds (variety LG 34.90) and tomato seeds (variety Agora Hybrid F1). The seeds were surface sterilised by washing for 5 minutes in 96% ethanol, followed by 10 minutes in 5% bleach. The seeds were then washed extensively and allowed to hydrate in sterile MilliQ water for 4 hours. For germination, the seeds were placed on a bed of filter paper moistened with sterile MilliQ water. The seeds were left to germinate in darkness for 4 days, after which the seedlings were placed in hydroponic culture trays with the roots immersed in standard Hoagland nutrient solution. Twelve plants were placed in each tray, with three trays (each corresponding to a biological replicate) for the control treatment and three trays for the phosphorus-free treatment. The plants were grown at a temperature and photoperiod of 25 °C and 16 h light/22 °C and 8 h darkness and a light intensity of 4,000 lux on the surface.

The nutrient solution was replaced with fresh solution every three days and kept aerated at all times by bubbler probes. After 10 days of growth, the plants were subjected to phosphorus depletion treatment. For this, three trays were incubated for three days with modified Hoagland solution without phosphorus and the remaining three trays were incubated with full solution. After incubation, root exudates were obtained.

The plants were carefully removed from the culture trays and washed with plenty of water, followed by a final wash with distilled water. Plants corresponding to each tray were placed in wide-necked flasks containing 200 ml of MilliQ water, the roots being immersed in the water. The plants were incubated in the flasks for 6 hours. Subsequently, the plants were removed and the insoluble material was removed from the solution by filtering with 0.20 µm filters. The filtered material was flash-frozen in liquid nitrogen and freeze-dried. The dried material obtained was weighed and analysed by gas-mass chromatography after derivatisation with methoxyamine and N-methyl-(trimethylsilyltrifluoroacetamide).

Table 1 shows the metabolites exuded by the plants and their ratios under phosphorus-free versus control conditions.

**Table 1**

| Increase of metabolites released in the absence of phosphorus. Ratio -P / P | | | |
|---|---|---|---|
| Maize | | Tomato | |
| Gluconic acid | 6.52 | Gluconic acid | 8.30 |
| Glyceric acid | 3.15 | Lactic acid | 6.44 |
| Lactic acid | 2.72 | Glyceric acid | 6.27 |
| Glucose | 2.23 | Erythritol | 5.76 |
| Threonic acid | 2.16 | Serina | 4.21 |
| Fructose | 1.75 | Aspartic acid | 3.62 |
| Aspartic acid | 1.65 | Glucose | 3.39 |
| Serina | 1.64 | Fructose | 3.11 |
| Glycerol | 1.56 | GABA | 2.85 |
| Arabinose | 1.40 | Threonic acid | 2.73 |
| Glutamine | 1.27 | Glutamine | 2.34 |
| | | Arabinose | 2.74 |
| | | Glycerol | 1.62 |

Based on these results, the 11 matching metabolites in the exudates of both cultures were selected. These metabolites were: gluconic acid, glyceric acid, lactic acid, glucose, threonic acid, fructose, aspartic acid, serine, glycerol, arabinose and glutamine. Each of the metabolites was applied separately at a dose of 1 kg/ha in a pot with 3 kg of soil, maize plants were planted (4 pots per treatment with one plant per pot) and the effect on their dry weight was observed after 6 weeks. The effect of the metabolites was compared with a negative control (no treatment) and a positive control with a conventional phosphate fertiliser (triple superphosphate at a dose of 100 phosphorus fertiliser units -P₂O₅- per hectare). The soil came from an agricultural soil with a sandy loam texture and an assimilable phosphorus content of 0.5 ppm, which is considered a very low level of this element for agricultural practices (Guía práctica de la fertilizacion racional de los cultivos en España *[Handbook of rational fertilisation of crops in Spain],* MAPAMA 2009). This level of assimilable phosphorus corresponds to 4.5 kg of P₂O₅ per hectare (considering 30 centimetres of arable soil and an average density of 1,300 kg/m³, the mass per hectare would be approximately 3,900 tonnes). The total phosphorus level in this soil, including that not available to plants, was 252 ppm (2,251 kg P₂O₅ / ha).

The selected metabolites enhance maize growth to varying degrees, as shown in Table 2 below.

**Table 2**

| Dry biomass of maize plants at 6 weeks of growth. | | |
|---|---|---|
| Compound | Dry weight (g) | Standard error |
| Control | 1.11 | ± 0.06 |
| Gluconic acid | 1.77 | ± 0.03 |
| Glyceric acid | 1.93 | ± 0.05 |
| Lactic acid | 1.73 | ± 0.06 |
| Glucose | 1.45 | ± 0.05 |
| Threonic acid | 1.14 | ± 0.03 |
| Fructose | 1.38 | ± 0.04 |
| Aspartic acid | 1.16 | ± 0.05 |
| Serine | 1.31 | ± 0.02 |
| Glycerol | 1.30 | ± 0.07 |
| Arabinose | 1.26 | ± 0.05 |
| Glutamine | 1.55 | ± 0.07 |
| Triple superphosphate | 1.91 | ± 0.05 |

The above results indicate that glyceric acid is the most growth-enhancing metabolite in maize, achieving the same result as conventional phosphate treatment with triple superphosphate.

### 2. Application of the fertilising composition and combination of the invention

Three fertilising compositions in the form of a hydrosoluble powder were prepared according to the invention with the following composition:
A: 100% by weight of glyceric acid
B: a combination of 30-80% by weight of glyceric acid and 5-30% gluconic acid, 5-30% lactic acid and 5-30% glutamine;
C: a combination of 30-80% by weight of glyceric acid and 5-30% glucose, 5-30% fructose and 5-30% glycerol.

These products (A, B, C) were tested in field trials on maize and tomato plants and compared with a negative control (no treatment) and a positive control of conventional phosphate fertilisation consisting of triple superphosphate (D). The rates and mode of application were as follows:
- For maize:
   - A: 10.0 kg/ha via fertigation.
   - B: 10.0 kg/ha via fertigation.
   - C: 10.0 kg/ha via fertigation.
   - D: Triple Superphosphate: 100 Phosphorus (P₂O₅) fertiliser units per hectare
- For the tomato:
   - A: 8.0 kg/ha via fertigation.
   - B: 8.0 kg/ha via fertigation.
   - C: 8.0 kg/ha via fertigation.
   - D: Triple superphosphate: 80 phosphorus fertiliser units (P₂O₅) per hectare

The treatments significantly improved yield and phosphorus content of maize (Tables 3 and 4) as well as tomato (Tables 5 and 6).

**Table 3**

| Maize yield (Tn grain/ha). | |
|---|---|
| Control | 8.17 |
| A | 9.29 |
| B | 10.14 |
| C | 9.82 |
| D | 10.10 |

**Table 4**

| Total phosphorus concentration in maize (%). | |
|---|---|
| Control | 0.16 |
| A | 0.25 |
| B | 0.31 |
| C | 0.29 |
| D | 0.31 |

**Table 5**

| Tomato yield (Tn/ha). | |
|---|---|
| Control | 44.5 |
| A | 49.8 |
| B | 53.2 |
| C | 51.5 |
| D | 52.7 |

**Table 6**

| Total phosphorus concentration in tomato (%). 2nd bunch | |
|---|---|
| Control | 0.11 |
| A | 0.18 |
| B | 0.23 |
| C | 0.20 |
| D | 0.22 |

In order to determine whether the increase in phosphorus content in the treatments studied is due to an increase in the availability of assimilable phosphorus for the plants, phosphorus balances were carried out in the trials with maize and tomato plants.

In trial 2, the same agricultural soil was used as in trial 1, with an assimilable phosphorus content of 0.5 ppm (corresponding to 1.95 kg/ha phosphorus and 4.5 kg/ha P₂O₅ fertiliser units) and a total phosphorus content of 252 ppm (corresponding to 983 kg/ha phosphorus and 2,251 kg/ha P₂O₅ fertiliser units).

In treatments A, B and C, no phosphorus fertiliser units were added, as none of the molecules used in these treatments contain this element.

Taking into account the dry weight of the biomass of maize and tomato plants (see Tables 7 and 8) and the percentage of total phosphorus in the plants (Tables 4 and 6), the kg of phosphorus present in the biomass obtained per hectare can be calculated. As can be seen, the amount of phosphorus in the dry biomass is much higher in all cases than the amount of phosphorus available in the soil. Therefore, the increase in phosphorus content of the plants is necessarily due to an increase in the availability of plant-assimilable phosphorus thanks to the fertilising composition with assimilable phosphorus potentiator.

**Table 7**

| Phosphorus balance in maize plants. | | |
|---|---|---|
| | Biomass dry weight (Tn/ha) | kg of P dry biomass/ha |
| Control | 8.36 | 13.38 |
| A | 9.52 | 23.80 |
| B | 10.08 | 31.25 |
| C | 9.88 | 28.65 |
| D | 10.03 | 31.09 |

**Table 8**

| Phosphorus balance in tomato plants. 2nd bunch | | |
|---|---|---|
| | Biomass dry weight (Tn/ha) | kg of P dry biomass/ha |
| Control | 4.5 | 4.95 |
| A | 5.7 | 10.26 |
| B | 6.1 | 14.03 |
| C | 5.8 | 11.60 |
| D | 6.1 | 13.42 |

In all the tests carried out, the soil used had a pH of 8.4 and a percentage of active limestone of 14%. These conditions are typical of calcareous soils, in which phosphorus precipitates with calcium give rise to calcium phosphates. Thus, in this type of soil, the solubilisation of insoluble phosphorus will not only release assimilable phosphorus for the plants, but also assimilable calcium.

## Claims

1. A fertilising composition which includes a plant-assimilable phosphorus and calcium potentiator, **characterised in that** the plant-assimilable phosphorus and calcium potentiator is glyceric acid.

2. The fertilising composition according to claim 1, **characterised in that** it consists of 100% by weight of glyceric acid in the form of a hydrosoluble powder or in a water-dissolved form.

3. The fertilising composition according to claim 1, **characterised in that** it comprises 30 to 80% by weight of glyceric acid and 5 to 30% by weight of other components selected from the group consisting of sugars, amino acids, organic acids other than glyceric acid, polyamines, glycerol, myoinositol, adenine, uracil, cytosine, guanine and combinations thereof, the fertilising composition being in the form of a hydrosoluble powder.

4. The fertilising composition according to claim 3, **characterised in that** the sugars are preferably selected from sucrose, fructose, trehalose, glucose, arabinose, maltose, as well as mixtures thereof.

5. The fertilising composition according to claim 3, **characterised in that** the amino acids are selected from threonine, lysine, phenylalanine, glutamic acid, methionine, GABA, ornithine, glycine, glutamine, aspartic acid, serine, asparagine, tyrosine, tryptophan, valine, leucine, isoleucine, proline, 4-hydroxyproline, arginine, histidine, alanine, cysteine, and mixtures thereof.

6. The fertilising composition according to claim 3, **characterised in that** the organic acids other than glyceric acid are selected from lactic acid, succinic acid, oxalic acid, gluconic acid, threonic acid, fumaric acid and mixtures thereof.

7. The fertilising composition according to claim 3, **characterised in that** the polyamines are selected from putrescine, spermidine, spermine and mixtures thereof.

8. A combination of the fertilising composition according to any of claims 3 to 7 with another additional fertiliser selected from nitrogen fertilisers, phosphate fertilisers, potassium fertilisers, calcium fertilisers and amendments, micronutrients, boric acid and leonardite, as well as combinations thereof.

9. The combination according to claim 8, **characterised in that** the fertilising composition according to any of claims 3 to 7 is present in the combination in a proportion of 0.5 to 10% by weight.

10. The combination according to claims 8-9, **characterised in that** the additional nitrogen fertiliser is present in the combination in a proportion of 5 to 90% by weight and is selected from urea, ammonium nitrosulphate, potassium nitrate, ammonium sulphate, ammonium nitrate, calcium nitrate.

11. The combination according to claims 8-9, **characterised in that** the additional phosphate fertiliser is present in the combination in a proportion of 5 to 90% by weight and is selected from phosphate rock, triple superphosphate, single superphosphate, concentrated superphosphate, phosphoric acid.

12. The combination according to claims 8-9, **characterised in that** the additional potassium fertiliser is present in the combination in a proportion of 5 to 90% by weight and is selected from potassium chloride, potassium sulphate, potassium and magnesium double sulphate, potassium hydroxide.

13. The combination according to claims 8-9, **characterised in that** the additional calcium fertiliser is present in the combination in a proportion of 5 to 90% by weight and is selected from calcium chloride, calcium cyanamide, calcium sulphate, dolomite, limestone, calcium oxide, calcium hydroxide.

14. The combination according to claims 8-9, **characterised in that** the additional micronutrient fertiliser is present in the combination in a proportion of 1 to 30% by weight and is selected from iron sulphate, magnesium sulphate, zinc sulphate, manganese sulphate, copper sulphate, ammonium molybdate, cobalt chloride.

15. The combination according to claims 8-9, **characterised in that** boric acid as an additional fertiliser is present in the combination in a proportion of 1 to 30% by weight.

16. The combination according to claims 8-9, **characterised in that** leonardite as an additional fertiliser is present in the combination in a proportion of 5 to 90% by weight.

17. The combination of the fertilising composition according to any of claims 3 to 7 with one or more biostimulants selected from the group consisting of amino acid hydrolysates, humic extracts, algae extracts, live micro-organisms or extracts of micro-organisms and combinations thereof.

18. The combination according to claim 17, **characterised in that** the biostimulants are present in the combination in a proportion of 5 to 90% by weight.

19. A use of the fertilising composition according to claims 1 to 7 in the form of a hydrosoluble powder, granulate or liquid form prior dissolution in water for application by fertigation or foliar application.

20. The use according to claim 19, **characterised in that** it is applied in a quantity of 0.5 to 20 kg/ha and 0.06 to 1 kg/ha as a hydrosoluble powder by fertigation or foliar application prior dissolution in water, respectively.

21. The use of the combination according to claims 8 to 18, in the form of a hydrosoluble powder, granulate or liquid form prior dissolution in water for application by fertigation or foliar application.

22. The use according to claim 21, **characterised in that** it is applied directly in an amount of 75 to 1,500 kg/ha in granulate form.

23. The use according to claim 21, **characterised in that** it is applied by fertigation or foliar application in an amount of 0.5 to 20 kg/ha and 0.06 to 1 kg/ha respectively.
